Europäisches Patentamt

European Patent Office

Office européen des brevets

(11) Numéro de publication: **0 039 870**
**B1**

(12) **FASCICULE DE BREVET EUROPEEN**

(45) Date de publication du fascicule du brevet: **12.09.84**

(21) Numéro de dépôt: **81103358.8**

(22) Date de dépôt: **05.05.81**

(51) Int. Cl.³: **F 16 L 3/00**

(54) **Dispositif de suspension d'une gaine de circulation de gaz.**

(30) Priorité: **08.05.80 FR 8010275**

(43) Date de publication de la demande:
**18.11.81 Bulletin 81/46**

(45) Mention de la délivrance du brevet:
**12.09.84 Bulletin 84/37**

(84) Etats contractants désignés:
**BE CH DE FR GB IT LI**

(56) Documents cités:
**CH-A- 599 475**
**GB-A- 914 323**
**US-A-2 916 054**
**US-A-4 077 592**

(73) Titulaire: **STEIN INDUSTRIE Société anonyme dite:**
**19-21, Avenue Morane Saulnier B.P. 74**
**F-78141 Velizy-Villacoublay (FR)**

(72) Inventeur: **Fournier, Jean**
**12, Chemin sous la Ville**
**F-78730 Rochefort en Yvelines (FR)**
Inventeur: **Patron, Henri**
**2, Allée des Marronniers**
**F-92350 Le Plessis Robinson (FR)**

(74) Mandataire: **Weinmiller, Jürgen et al**
**Zeppelinstrasse 63**
**D-8000 München 80 (DE)**

Courier Press, Leamington Spa, England.

**Description**

La présente invention concerne un dispositif de suspension d'une gaine de circulation de gaz de grandes dimensions de section rectangulaire, par exemple jusqu'à 17m sur 8m, en tôle mince, comprenant deux organes rigides qui sont fixés de manière solidaire à deux parois opposées de la gaine, et des moyens d'accrochage de ces organes rigides à un bâti fixe à un niveau plus élevé.

De telles gaines sont utilisées notamment pour la circulation d'air ou de fumées dans les chaudières, ou générateurs de vapeur. Elles peuvent atteindre des hauteurs de plusieurs dizaines de mètres et des dimensions transversales de 16 à 17 m sur 7 à 8 m. Elles sont en tôle mince, d'une épaisseur de quelques millimètres, et très généralement en forme de parallélépipède rectangle.

On avait muni ces gaines dans la centrale électrique de Porcheville (France), mise en service en 1974, de dispositifs de suspension comprenant sur deux faces opposées de la largeur de la gaîne des organes rigides formés par des plaques épaisses soudées sur des entretoises robustes solidaires des poutres du châssis de la gaine. L'une des plaques était horizontale et traversée par une tige verticale reliée au bâti fixe. De tels dispositifs présentent l'inconvénient que la gaine est soumise à des contraintes importantes de flexion par rapport à ses organes rigides d'extrémité. Ceci oblige à renforcer la gaine, en particulier sur ses plus grandes faces, de sa section droite horizontale, selon la longueur, par des entretoises, qui en compliquent la fabrication et en augmentent le poids.

La présente invention a pour but de remédier à ces inconvénients, et de procurer un dispositif de sispension d'une gaine de circulation de gaz de grandes dimensions, qui réduise dan sune très large mesure les contraintes de flexion vis-à-vis des organes rigides solidaires des moyens d'accrochage, et permette de supprimer ou de réduire considérablement les entretoises de renforcement de la gaine.

Le dispositif de suspension selon l'invention est caractérisé en ce qu'il comporte en outre au moins un élément long et rigide traversant l'espace intérieur de la gaine de l'un des organes rigides à l'autre, et en ce que les moyens d'accrochage sont reliés à cet élément long et rigide.

Il répond en outre de préférence à au moins l'une des caractéristiques suivantes:

— L'élément long et rigide est un tube à paroi épaisse.

— Les extrémités de l'élément long et rigide sont fixées dans des berceaux auxquels sont reliés les moyens d'accrochage.

Il est décrit ci-après, à titre d'exemple et en référence aux figures du dessin annexé, un dispositif de suspension de gaine de circulation de gaz selon l'invention.

La figure 1 représente schématiquement un dispositif selon l'invention.

La figure 2 représente en élévation latérale certains détails d'une variante du dispositif selon la figure 1.

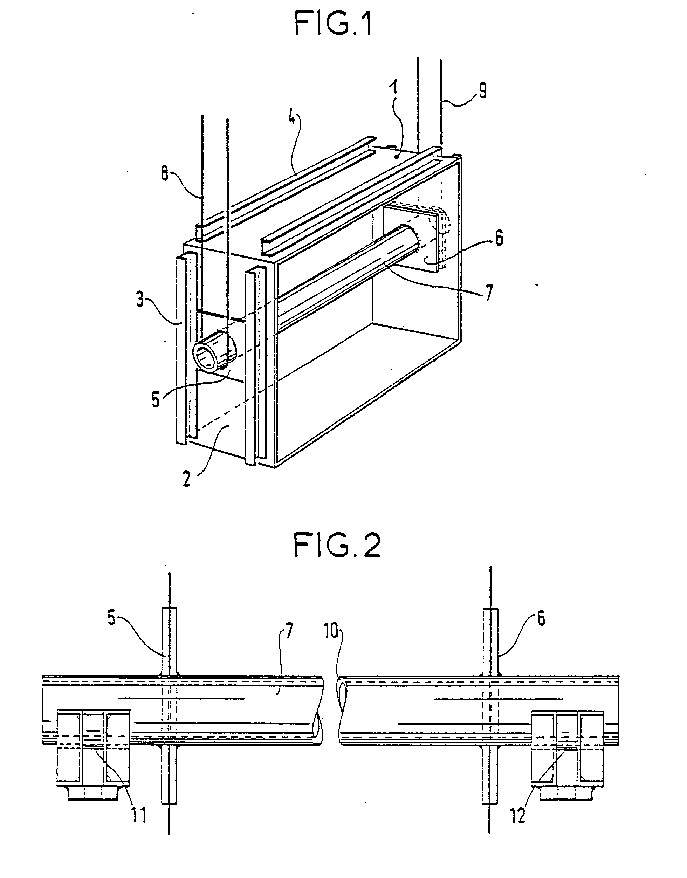

Dans la figure 1, la gaine comporte des faces longitudinales 1 et latérales 2, solidaires d'un châssis formé par des poutres 3, 4. Le gaz s'écoule dans la gaine. Les faces latérales de celle-ci sont munies de plaques épaisses 5, 6 traversées en leur milieu par un tube transversal rigide 7. Le tube 7 est supporté à ses deux extrémités par des câbles 8, 9 fixés à leur extrémité supérieure à un bâti rigide, non représenté.

La figure 2 représente en élévation latérale le tube transversal rigide 7, à paroi épaisse 10. Celui-ci traverse les plaques d'extrémité épaisses 5, 6 auxquelles il est soudé sur son pourtour, et vient reposer par ses extrémités sur les berceaux 11, 12 auxquels il est également soudé. Les tiges de suspension (non représentés sur cette figure) sont fixés à ces berceaux.

On voit que les tôles de la gaine ne subissent pratiquement plus de contraintes de flexion par rapport à la suspension, mais travaillent en cisaillement presque pur.

Bien que le dispositif de suspension qui vient d'être décrit en référence aux figures paraisse la forme de réalisation préférable de l'invention, le tube transversal rigide pourrait être remplacé par une poutre rigide creuse de section droite carrée ou rectangulaire, et les berceaux pourraient être remplacés par des colliers.

**Revendications**

1. Dispositif de suspension d'un gaine de circulation de gaz de grandes dimensions de section rectangulaire, par exemple jusqu'à 17m sur 8m, en tôle mince, comprenant deux organes rigides (5, 6) qui sont flxés de manière solidaire à deux parois (2) opposées de la gaine, et des moyens (8, 9) d'accrochage de ces organes rigides, à un bâti fixe à un niveau plus élevé, caractérisé en ce qu'il comporte en outre au moins un élément long et rigide (7) traversant l'espace intérieur de ladite gaine de l'un des organes rigides à l'autre, et en ce que les moyens d'accrochage sont reliés à cet élément long et rigide (7).

2. Dispositif selon la revendication 1, caractérisé en ce que l'élément long et rigide (7) est un tube à paroi épaisse (10).

3. Dispositif selon les revendications 1 ou 2, caractérisé en ce que les extrémités de l'élément long et rigide (7) sont fixées dans des berceaux (11, 12) auxquels sont reliés les moyens d'accrochage (8, 9).

**Patentansprüche**

1. Aufhängevorrichtung für eine Gasleitung großer Abmessungen mit rechteckigem Querschnitt, z.B. bis zu 17 m auf 8 m, bestehend aus dünnem Blech, mit zwei starren Organen (5, 6), welche fest mit zwei entgegengesetzten Wänden (2) der Leitung verbunden sind, und mit Befestingungsmitteln (8, 9) für diese starren Organe an einem festen Gerüst auf einer höheren Ebene, dadurch gekennzeichnet, daß sie außerdem mindestens ein langes und starres Element (7) aufweist, das den Innenraum der Leitung von einem der starren Organe zum anderen durchquert, und daß die Befestigungsmittel mit diesem langen und starren Element (7) verbunden sind.

2. Vorrichtung nach Anspruch 1, dadurch gekennzeichnet, daß das lange und starre Element (7) ein Rohr mit dicker Wand (10) ist.

3. Vorrichtung nach den Ansprüchen 1 oder 2, dadurch gekennzeichnet, daß die Enden des langen und starren Elements (7) in Lagerschalen (11, 12) befestigt sind, mit denen die Befestigungsmittel (8, 9) verbunden sind.

## Claims

1. A hanging device for gas pipes of great dimensions of rectangular cross-section, for example up to 17 to 8 m, of thin sheet-metal, comprising two rigid elements (5, 6) integral with two opposite walls (2) of the pipe and means (8, 9) for fixing these rigid elements to a fixed structure at a higher level, characterized in that it further comprises at least a long and rigid element (7) passing through the inner space of said pipe from one of the rigid elements to the other, and in that the fixing means are connected to this long and rigid element (7).

2. A device according to claim 1, characterized in that the long and rigid element (7) is a tube with a thick wall (10).

3. A device according to the claims 1 or 2, characterized in that the ends of the long and rigid element (7) are fixed in supports (11, 12) to which the fixing means (8, 9) are connected.

# FIG.1

# FIG.2